# FASCICULE DE BREVET EUROPEEN

(11) **EP 0 665 450 B1**
(45) Date de publication et mention de la délivrance du brevet: **21.07.1999**
(21) Numéro de dépôt: 95400151.7
(22) Date de dépôt: 24.01.1995
(51) Int. Cl.: G02B 6/12, G02B 6/26, G02B 6/30

(54) **Dispositif de transition de guide optique et procédé de sa réalisation**
Wellenleiterübergangvorrichtung und seine Herstellung
Waveguide transition device and its process of fabrication

(30) Priorité: 27.01.1994 FR 9400886
(43) Date de publication de la demande: 02.08.1995
(73) Titulaire: ALCATEL, 75008 Paris (FR)
(72) Inventeur: Vinchant, Jean-Francois, F-91680 Bruyeres le Chatel (FR); Doussière, Pierre, F-91180 St Germain les Arpajon (FR)
(74) Mandataire: Lamoureux, Bernard

(56) Documents cités:
- EP-A- 0 498 320
- EP-A- 0 583 679
- JOURNAL OF VACUUM SCIENCE AND TECHNOLOGY: PART B, vol. 10,no. 6, Novembre 1992 NEW YORK US, pages 2979-2983, BRÜCKNER ET AL.
- ELECTRONICS LETTERS, vol. 28,no. 17, 13 Août 1992 STEVENAGE GB, pages 1610-1611, YOSHIMOTO ET AL.
- ELECTRONICS LETTERS, vol. 29,no. 4, 18 Février 1993 STEVENAGE GB, pages 326-328, SCHWANDER

## Description

Le domaine de l'invention est celui des composants optiques et plus particulièrement celui des composants optiques qui peuvent être intégrés dans des circuits optiques ou optoélectroniques intégrés ou monolithiques. Plus précisément, l'invention concerne une transition entre différentes structures guidantes qui assurent les interconnexions optiques entre différents composants d'un circuit optique ou électro-optique. Les structures guidantes concernées par l'invention sont connues de l'homme de l'art sous les noms de ruban gravé et ruban enterré respectivement.

Les différents composants électro-optique qui peuvent avoir besoin d'être connectés par des structures guidantes d'interconnexions comprennent par exemple : des lasers, des diodes émettrices de lumière, des photodiodes, des modulateurs électro-optique, des fibres optiques, des commutateurs, des coupleurs, des amplificateurs optiques, des miroirs, des filtres, des réseaux de diffraction, et cetera. Il se trouve que chaque composant aura en général une structure guidante préférée, pour des raisons technologiques ou pour des raisons de performances, et que la structure préférée n'est pas toujours la même pour tous les composants que l'on voudrait interconnecter. D'où le besoin de transitions de guides optiques entre différents types de structures guidantes.

Pour pouvoir envisager l'intégration industrielle de circuits optiques ou optoélectroniques, que cette intégration soit de type hybride ou monolithique, la transition entre les différentes structures guidantes doit être réalisable utilisant les mêmes technologies que celles utilisées pour réaliser les structures guidantes elles-mêmes.

Différentes techniques d'intégration monolithique ou hybride connues de l'art antérieur sont décrites par exemple dans les documents suivants :
D1 : "Micro hybrid integrated devices and componnents : Micro Photonic Devices" de K. Imanaka, SPIE v. 1751, Miniature and micro-optics, 1992.
D2 : "Monolitihic vs. Hybrid approach for photonic circuits", de M. Erman, Proceedings ECIO, 1993.
D3 : "L'optique intégrée dans les matériaux semiconducteurs III-V", par A. Carenco et al., L'Echo des Recherches, n°137, 1989.

Pour intégrer une structure guidante a ruban enterré (connu de l'homme de l'art par le terme anglophone "buried optical waveguide") à une structure à ruban gravé (ridged optical waveguide en anglais), l'homme de l'art connaît deux techniques de l'art antérieur.

La première est d'utiliser une configuration bout-à-bout (butt-joint en anglais), mais cette solution requiert une tolérance mécanique d'assemblage de très haute précision, qui est donc difficile et coûteux à réaliser, et sans laquelle les pertes de transmission au niveau de la transition atteignent un niveau inacceptable.

Une autre technique consiste à utiliser un convertisseur de mode en une extrémité du composant, mais cette possibilité est très difficile, voire impossible d'intégrer dans un dispositif monolithique.

Une autre technique est décrite dans Electronics Letters, Vol. 28, No. 13, 1992, pages 1610-1611 ou dans EP-A-0 498 320.

La présente invention cherche à pallier les inconvénients de l'art antérieur, et permettre la réalisation plus aisée d'une transition de guide optique, moins cher, avec des pertes de transmission plus faibles, et intégrable.

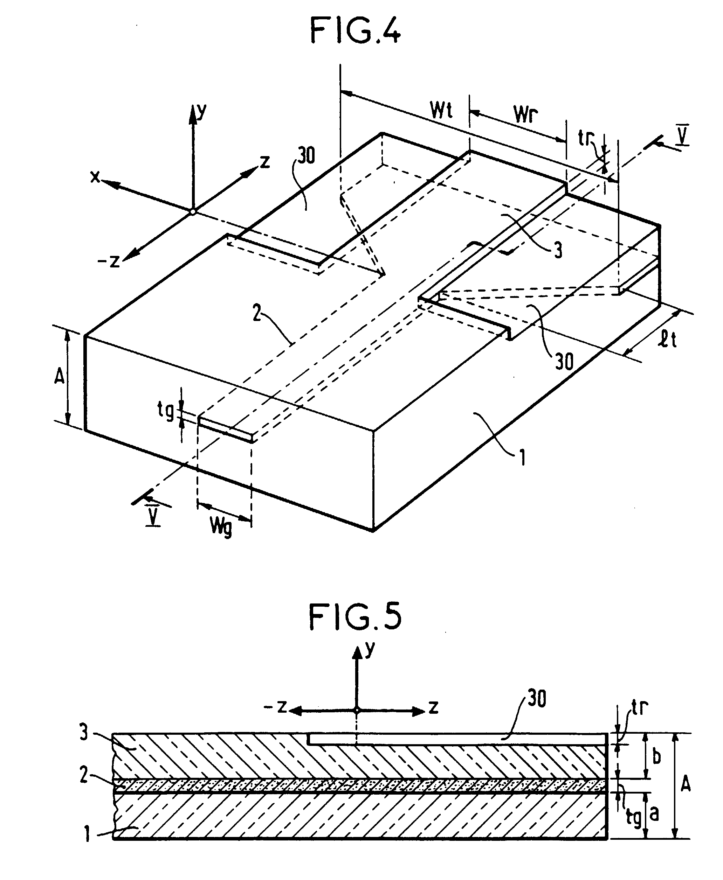

A ces fins, l'invention propose, telle que montrée sur la figure 4, un dispositif de transition de guides optiques comprenant un guide ruban enterré 2 et un guide ruban gravé 3, ladite transition permettant un couplage d'onde entre un mode de propagation dudit guide ruban enterré 2 et un mode de propagation dudit guide ruban gravé 3 ; **caractérisé en ce que** ledit guide enterré comprend une zone de transition (2ₜ = lₜ,wₜ), cette zone de transition 2ₜ présentant un élargissement latéral dudit guide ruban enterré 2 selon sa longueur (lₜ), et en ce qu'un chevauchement partiel des deux guides dans ladite zone de transition est pourvu afin de permettre un couplage des deux modes de propagation selon une direction (+/-z) préférentielle de propagation dans les deux guides.

Selon une caractéristique préférée, le guide ruban gravé 3 à une largeur constante sur toute sa longueur, et le guide ruban enterré 2 a une largeur qui varie de façon adiabatique dans la zone de transition 2ₜ.

Selon une caractéristique particulière, ledit guide ruban enterré a une largeur qui varie de façon linéaire dans ladite zone de transition.

Selon une autre caractéristique, ledit guide ruban enterré a une largeur qui varie de façon exponentielle dans ladite zone de transition.

Selon une réalisation avantageuse, lesdits guides ruban enterré et ruban gravé sont réalisés sur un même substrat.

Selon une autre caractéristique, ladite transition comprend une "couche guidante" ou coeur qui est le même pour les deux guides optiques.

Selon une réalisation particulière, ladite zone de transition a une terminaison en inclinaison pour éviter des réflexions parasites éventuelles.

Selon une configuration particulièrement avantageuse, un circuit optoélectronique est réalisé comprenant au moins un dispositif selon l'une quelconque des réalisations précédentes. Selon une variante, ledit circuit optoélectronique est un circuit optoélectronique intégré. Selon une autre variante, ledit circuit optoélectronique intégré est un circuit optoélectronique intégré monolithique.

L'invention propose également un procédé de réalisation d'un dispositif de transition de guides optiques comprenant un guide ruban enterré et un guide ruban gravé, caractérisé en ce qu'il comprend en outre les étapes suivantes :
a) réalisation d'au moins une couche épitaxiale sur un substrat ;
b) gravure d'une couche guidante pour définir un guide ruban enterré et une structure de transition dont la largeur varie de façon adiabatique selon l'une quelconque des revendications 1 a 6 ;
c) réalisation d'au moins une couche épitaxiale dite supérieure, déposée par dessus ledit ruban enterré et ladite zone de transition ;
d) gravure d'une couche supérieure pour définir une structure de guide ruban gravée, ce guide ruban gravé étant disposé en superposition par rapport audit guide ruban enterré.

De toute façon, l'invention sera mieux comprise a l'aide de la description détaillée qui suit, avec ses dessins annexés, dont :
- les figures 1, 2, et 3 montrent schématiquement et en perspective, quelques étapes de réalisation d'une transition de guides optiques selon l'invention :
   - la figure 1 montre une étape de la réalisation du guide ruban enterré sur le substrat du circuit optoélectronique;
   - la figure 2 montre le dépôt de couches épitaxiales par dessus le guide ruban enterré;
   - la figure 3 montre la gravure du guide ruban gravé sur la surface supérieure du dispositif selon l'invention ;
- la figure 4 montre schématiquement en perspective et en transparence partielle, une transition selon l'invention ;
- la figure 5 montre en coupe partielle selon V-V le dispositif de la figure 4 ;
- la figure 6 montre schématiquement en transparence partielle, en vue de dessus, un exemple d'une transition selon l'invention ;
- la figure 7 montre schématiquement et en transparence partielle, un autre exemple d'une réalisation d'une transition de guides optiques selon l'invention, avec une terminaison en inclinaison pour éviter des réflexions parasites éventuelles ;
- la figure 8 montre les résultats d'une simulation (calcul de propagation de faisceau, BPM en anglais) des pertes qui résultent d'un désalignement des guides de la transition selon l'invention, en fonction de la longueur lₜ de la transition ;
- la figure 9 montre les résultats d'une simulation par calcul BPM des pertes en fonction de l'importance d'un désalignement ou décalage entre les deux guides de la transition d'une longueur de 200 µm;
- la figure 10 montre schématiquement et en bloc-diagramme les étapes du procédé de réalisation d'un dispositif de transition de guides optiques selon l'invention.

Les dessins représentent des exemples non-limitatifs des réalisations selon l'invention. Sur toutes les figures, les mêmes repères se référent aux mêmes éléments ; l'échelle n'est pas toujours respectée pour des raisons de clarté.

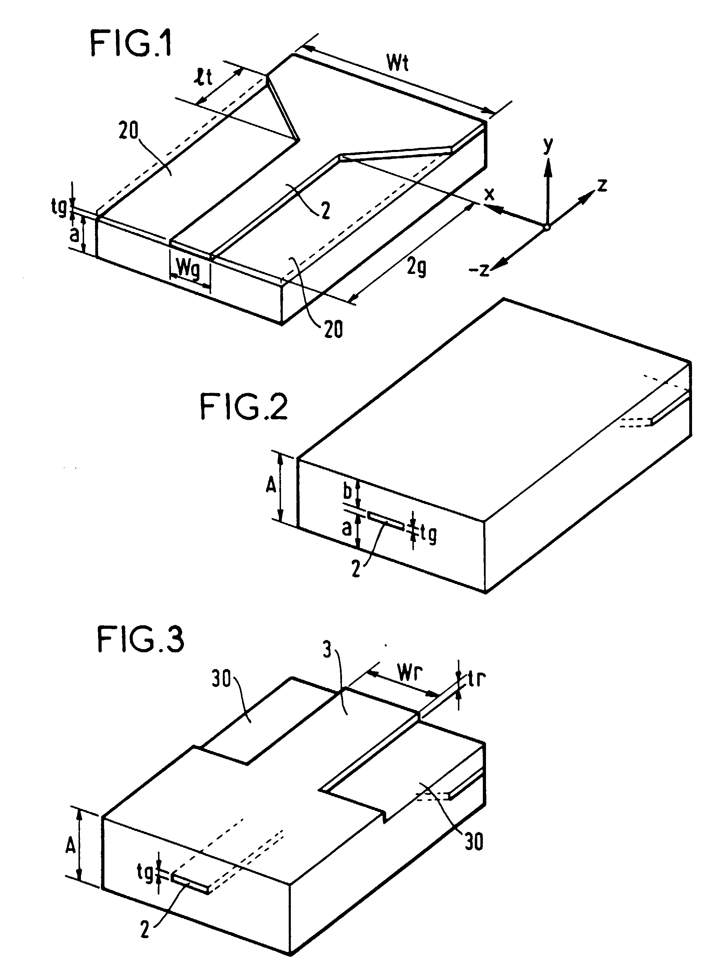

Sur la figure 1, nous voyons une première étape de réalisation d'une transition selon l'invention. Sur un substrat 1 d'épaisseur a, une couche guidante 2 a été déposée par les techniques classiques d'épitaxie de couches fines, telles que habituellement appliquées à l'élaboration de composants électroniques ou optoélectroniques. Le substrat 1 sera un substrat semi-conducteur présentant les qualités requises pour l'élaboration du circuit optoélectronique envisagé. A l'état actuel de la technique, et tel que décrit dans le document D3 cité ci-dessus, le substrat sera par exemple un composé III-V, tel l'AlₓGa₁₋ₓAs sur GaAs (avec x<1) ou tel que l'InP ; des travaux actuels portent également sur l'utilisation de Si comme substrat pour de tels circuits. La couche guidante 2 sera respectivement par exemple GaAs (sur substrat AlGaAs) ou In₁₋ₓGaₓAs_{y}P_{1-y} ou encore In_{1-x-y}GaₓAl_{y}As sur substrat InP (x<1, y<1). Les composés III-V sont considérés comme étant prometteurs pour de tels circuits optoélectroniques intégrés parce que leur bande interdite correspond aux longueurs d'onde couramment utilisées dans des composants optoélectroniques actifs (lasers, diodes lumineuses, et cetera) et passifs (guides optiques, fibres optiques, et cetera), et parce que des composants purement électroniques peuvent aussi être élaborés de tels composés sur le même substrat.

La figure 1 ne montre que la partie du substrat qui porte la transition, mais ce substrat s'étend sur une surface bien plus grande dans le plan x-z, et peut comporter de nombreux composants optiques, électroniques, et électro-optiques. La couche épitaxiale à une épaisseur t_{g}. Les techniques classiques de gravure sont ensuite appliquées pour effectuer l'ablation des aires 20 de chaque coté pour définir une structure guidante 2 ayant une largeur w_{g} dans une zone 2_{g} de propagation guidée (qui formera ensuite un guide ruban enterré), et une largeur variable dans une zone de transition 2ₜ qui aura une longueur lₜ selon la direction de propagation z. Selon l'invention, la largeur de la structure guidante varie dans la zone de transition 2ₜ entre la largeur du guide ruban enterré w_{g} et la largeur finale de la transition wₜ . Selon une caractéristique avantageuse, cette variation de largeur est adiabatique.

La figure 2 montre une étape intermédiaire de la réalisation d'une transition de guides optiques selon l'invention. Une ou plusieurs couches épitaxiales, ayant une épaisseur totale b, ont été déposées sur la structure guidante de la figure la selon les techniques classiques connues de l'homme de l'art. L'épaisseur totale A du dispositif peut être donc décomposée en épaisseur a, du substrat 1, l'épaisseur t_{g} du guide ruban enterré, et l'épaisseur b de(s) couche(s) supérieure(s).

La figure 3 montre l'étape finale de réalisation d'une transition selon l'invention. Encore par des techniques classiques bien connues de l'homme de l'art, une gravure est effectuée à une profondeur de tᵣ sur la couche supérieure pour réaliser un guide optique 3 dit en ruban gravé par ablation des aires 30 de part et d'autre dudit guide ruban gravé 3. Le début du guide ruban gravé 3 est ainsi superposé sur la zone de transition 2ₜ présentant une largeur variable de la structure guidante enterrée.

La figure 4 montre schématiquement en perspective et en transparence partielle, un exemple d'une transition selon l'invention, tel qu'il peut être réalisé selon les étapes de fabrication montrées sur les figures précédentes. La description de cette figure, ainsi que les repères qui s'y rapportent, sont identiques a celles des figures 1 à 3, et donc ne seront pas répétées.

Cette vue de la figure 4 est instructive, dans la mesure ou elle nous montre la relation spatiale entre les structures de confinement latéral (+/- x) de l'onde guidée selon une direction préférentielle de propagation (+/- z). En effet, le "coeur" ou la couche guidante 2 reste la même avant, pendant, et après la transition de guides de l'invention. Seule la structure de confinement latéral change lors de la transition de modes de propagation. Dans la région -z, le confinement latéral est assuré par la largeur w_{g} de la couche guidante. Dans la région +z, le confinement latéral est assuré par la largeur wᵣ du guide optique formé par le ruban gravé 3 et la couche guidante, qui s'élargit selon la direction +z dans la zone de transition de longueur lₜ.

On peut donner un exemple non-limitatif d'un mode de réalisation du dispositif de la figure 4, en apportant des précisions sur les dimensions des couches et des structures guidantes, ainsi que des matériaux employés. Par exemple, pour une transition de guides optiques qui doit fonctionner à une longueur d'onde λ de 1,55 microns (µm), le dispositif de la figure 4 peut être réalisé sur un substrat InP, avec la couche guidante et le ruban enterré 2 réalisés d'un composé quaternaire In₁₋ₓGaₓAs_{y}P_{1-y} .

Le paramètre y, qui détermine la bande interdite du matériau quaternaire, sera choisi en fonction de la longueur d'onde λ de la lumière à véhiculer dans le guide. En effet, le paramètre y détermine la fréquence de coupure du guide, donc la longueur minimale λ_{g} de l'onde qui pourra se propager dans le guide. Pour λ < λ_{g}, la lumière est absorbée, tandis que pour λ > λ_{g}, le matériau est transparent. Dans l'exemple choisi, pour travailler a λ = 1,55 µm, on peut choisir λ_{g} = 1,3 µm, qui sera réalisé avec y = 0,62 environ ; ou bien pour obtenir λ_{g} = 1,5 µm, il faut utiliser y = 0.89 environ. Ensuite, le paramètre x est choisi pour assurer l'accord de maille avec le substrat, selon les règles connues de l'homme de l'art. La règle empirique est que x = y/2,197.

Si, dans la figure 4, on choisi une réalisation avec λ_{g} = 1,55 µm, l'indice de réfraction du guide enterré sera de l'ordre de n=3,57. Dans ces conditions, le confinement latéral peut être assuré par un guide ayant une largeur w_{g} = 2µm, avec une épaisseur de la couche guidante en In₁₋ₓGaₓAs_{y}P_{1-y} de 0,1 µm environ. Ensuite, une couche de InP est déposée sur le ruban enterré, et le confinement latéral est assuré par le saut d'indice optique entre le In₁₋ₓgAₓAs_{y}P_{1-y} et le InP qui l'entoure.

Quelques microns au dessus de la couche guidante, dans la zone de transition, le ruban gravé est réalisé dans une couche épitaxiale supérieure de InP. Cette structure assurera le confinement latéral de l'onde guidée, pendant et après l'élargissement de la couche guidante dans la zone de transition. Pour réaliser cette structure, une gravure est effectuée pour enlever une profondeur tᵣ de 1,5 µm, de chaque coté de la structure 3 de ruban gravé, qui aura une largeur de 4 µm environ par exemple.

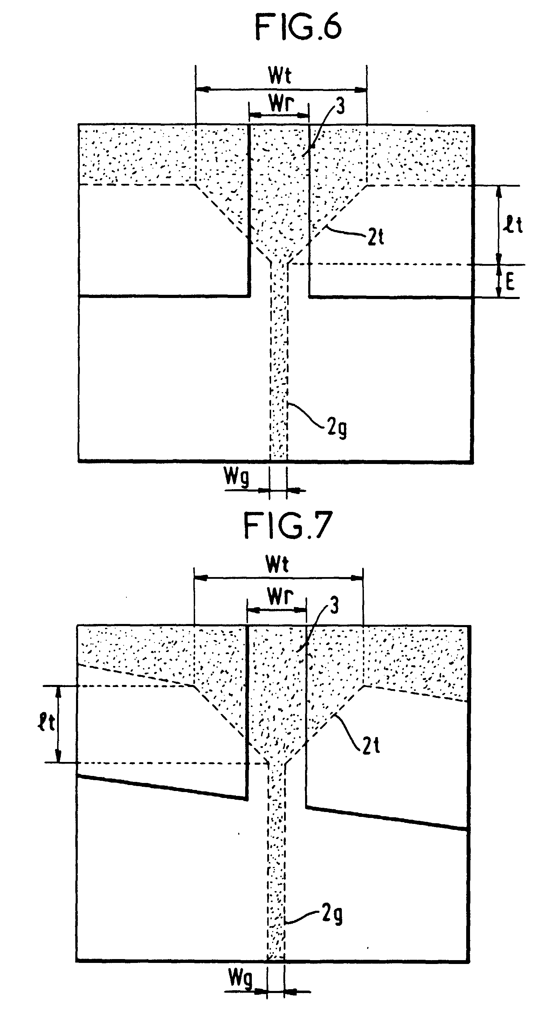

La figure 5 montre une coupe selon V-V du dispositif de la figure 4. Cette figure reprend les mêmes repères que les figures précédentes, qui se réfèrent aux mêmes structures. Le substrat 1 peut être réalisé en InP, avec la couche guidante 2 en In₁₋ₓGaₓAs_{y}P_{1-y} . La couche épitaxiale 3 qui vient noyer le ruban enterré sera également en InP, dans cet exemple. Nous faisons remarquer que la propagation de l'onde sera continue, dans le coeur ou la couche guidante 2, et que seulement la structure de confinement latéral change dans la région de la transition, étant en profondeur (ruban enterré) à la gauche de la figure (direction -z), et en surface (ruban gravé) à la droite de la figure (direction +z).

La figure 6 montre schématiquement en transparence partielle, en vue de dessus, un exemple d'une transition selon l'invention, conforme aux figures 4 et 5. Les mêmes repères se réfèrent aux mêmes éléments que précédemment. Sur cette figure l'on voit avec une plus grande clarté certaines dimensions du dispositif de l'invention. En particulier, on voit que le coeur ou couche guidante 2 peut être divisée en deux parties fonctionnelles, la partie 2_{g} qui constitue un guide optique grâce à un confinement latéral par saut d'indice dans le plan de la couche guidante, et la partie 2ₜ qui constitue la région de transition de guides.

On voit que dans la région de transition 2ₜ, la largeur du coeur s'accroît pour relâcher le confinement latéral dû au saut d'indice dans le plan de la couche guidante. La région de transition peut être caractérisée par les dimensions portées sur cette figure : la largeur wₜ du guide ruban enterré avant la transition ; la longueur lₜ de la région de transition dans laquelle la largeur du coeur s'accroît ; la largeur wₜ du coeur a la fin de la région de transition ; et la largeur wᵣ du ruban gravé 3 sur la couche épitaxiale supérieure, qui assure le confinement latéral après la transition. Une dimension E décrit l'écart entre le début du ruban gravé et le début de la région d'élargissement du coeur dans la zone de transition 2ₜ. Cette dimension sera choisie petite dans une réalisation préférée, mais on ne cherche pas a la réduire à zéro, car une telle décision implique une tolérance de fabrication très contraignante, sans amélioration sensible des performances attendues. La dimension E est donc choisie assez grande pour s'affranchir des problèmes de tolérances de fabrication, ce qui rend cette dimension non-critique.

Dans l'exemple de la figure 6, nous avons la géométrie la plus simple des gravures des couches guidantes 2 et supérieure 3, avec les frontières des gravures perpendiculiaires à la direction de propagation de la lumière dans les guides optiques. Par exemple, quand la région de transition 2ₜ s'élargit jusqu'à une largeur wₜ sur une longueur 2ₜ, ensuite il peut s'élargir a l'infini sans autre effet sur la lumière qui se propage sur le guide optique. Dans l'exemple présent, on voit cette frontière, à la fin de la région de transition lₜ qui est parallèle à celle de la gravure de la couche supérieure, et perpendiculaire aux deux structures de confinement latérales(2_{g}, 3).

De la même manière, le guide optique gravé commence a la frontière de la région gravée de la couche épitaxiale supérieure, cette frontière étant également perpendiculaire aux deux structures de confinement latérale (2_{g}, 3).

La figure 7 montre schématiquement et en transparence partielle, un autre exemple d'une réalisation d'une transition de guides optiques selon l'invention, avec une terminaison en inclinaison pour éviter des réflexions parasites éventuelles. Le dispositif de la figure 7 est identique au dispositif de la figure 6, à l'exception de l'inclinaison des frontières précédemment décrites par rapport à une direction perpendiculaire aux structures guidantes. Les interfaces de changement de modes de propagation, de fait qu'elles sont inclinées, ne donnent pas lieu aux réflexions parasites auxquelles on pourrait s'attendre, même à faible niveau, dans le cas précédent (de la figure 6).

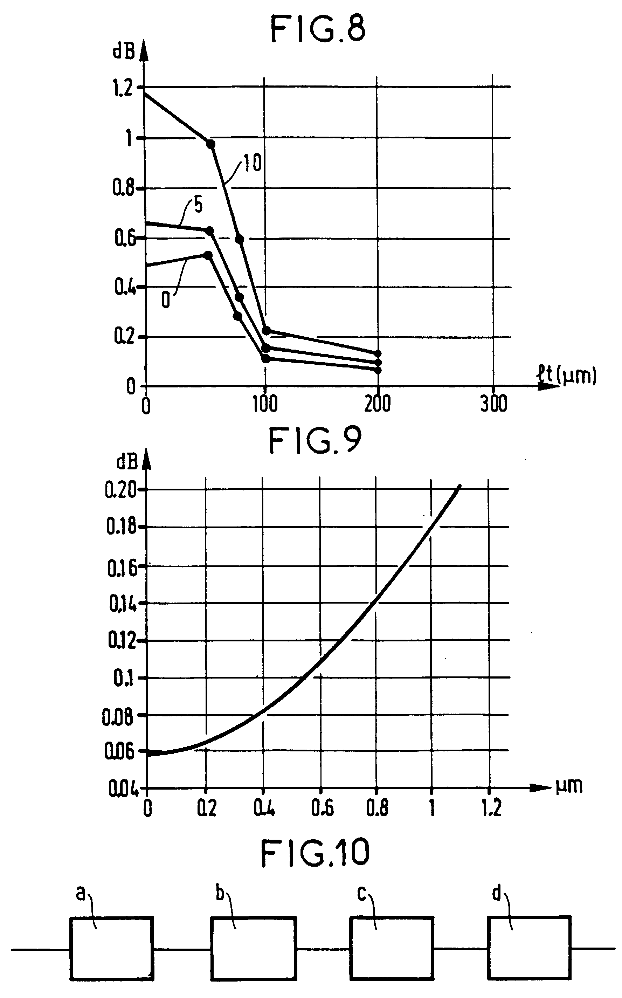

La figure 8 montre les résultats d'une simulation (calcul de propagation de faisceau, Beam Propagation Modeling ou BPM en anglais) des pertes qui résultent d'un désalignement des guides de la transition selon l'invention, en fonction de la longueur lₜ de la transition, et pour trois différentes valeurs de décalage ou désalignement. La courbe 0 représente le calcul pour un décalage de 0 µm, la courbe 5 pour un décalage de 0.5 µm, et la courbe 10 pour un décalage de 1 µm. On observe que les pertes de la transition de guides optiques de l'invention deviennent faibles et relativement insensibles au désalignement des deux guides, au delà d'une longueur de transition lₜ de 100 µm. Ceci permet une fabrication industrielle avec des tolérances de fabrication moins contraignantes, donc des possibilités de réduire les coûts de production ainsi que d'améliorer le rendement de fabrication.

La figure 9 montre les résultats d'une simulation par calcul BPM des pertes en fonction de l'importance d'un désalignement ou décalage entre les deux guides de la transition, pour une longueur de transition lₜ = 200 µm. On constate que les pertes sont très faibles et relativement insensibles au décalages pour de faibles décalages < 0,5 µm, par exemple, pour s'accroître à peu près linéairement en fonction du décalage ensuite, tout en restant faibles jusqu'à un micron de décalage.

La figure 10 montre schématiquement et en bloc-diagramme les étapes essentielles du procédé de réalisation d'un dispositif de transition de guides optiques selon l'invention:
a) réalisation d'au moins une couche épitaxiale sur un substrat ;
b) gravure d'une couche guidante pour définir un guide ruban enterré et une structure de transition dont la largeur varie selon sa longueur, selon la description ci-dessus;
c) réalisation d'au moins une couche épitaxiale dite supérieure, déposée par dessus ledit ruban enterré et ladite zone de transition ;
d) gravure d'une couche supérieure pour définir une structure de guide ruban gravée, ce guide ruban gravé étant disposé partiellement en superposition par rapport audit guide ruban enterré (dans la région de transition).

Bien entendu, l'invention a été décrite en faisant référence à quelques exemples non-limitatifs de réalisations préférées; et un procédé de fabrication selon l'invention a été décrit dans son expression la plus simple ; cependant, l'homme de l'art saura appliquer l'enseignement de cette demande de brevet dans des multiples variantes de l'invention, sans sortir pour autant du champ de protection convoitée, telle que définie dans les revendications qui suivent.

## Revendications

1. Dispositif de transition de guides optiques comprenant un guide ruban enterré 2 et un guide ruban gravé 3, ladite transition permettant un couplage d'onde entre un mode de propagation dudit guide ruban enterré 2 et un mode de propagation dudit guide ruban gravé 3 ; **caractérisé en ce que** ledit guide enterré comprend une zone de transition (2ₜ), cette zone de transition (2ₜ) présentant un élargissement latéral dudit guide ruban enterré 2 selon sa longueur (lₜ), et en ce qu'un chevauchement partiel par superposition verticale des deux guides dans ladite zone de transition est pourvu afin de permettre un couplage des deux modes de propagation selon une direction préférentielle (+/-z) de propagation dans les deux guides.

2. Transition de guides optiques selon la revendication 1, caractérisée en ce que ledit guide ruban gravé à une largeur constante sur toute sa longueur, et en ce que ledit guide ruban enterré a une largeur qui varie de façon adiabatique dans ladite zone de transition.

3. Transition de guides optiques selon la revendication 2, caractérisée en ce que ledit guide ruban enterré a une largeur qui varie de façon linéaire dans ladite zone de transition.

4. Transition de guides optiques selon la revendication 2, caractérisée en ce que ledit guide ruban enterré a une largeur qui varie de façon exponentielle dans ladite zone de transition.

5. Transition de guides optiques selon l'une quelconque des revendications 1 à 4, caractérisée en ce que lesdits guides ruban enterré et ruban gravé sont réalisés sur un même substrat.

6. Transition de guides optiques selon l'une quelconque des revendications 1 à 5, caractérisée en ce que la "couche guidante" ou "le coeur" est le même pour les deux guides.

7. Transition de guides optiques selon l'une quelconque des revendications 1 a 6, caractérisée en ce que ladite zone de transition a une terminaison en inclinaison pour éviter des réflexions parasites.

8. Circuit optoélectronique comprenant au moins un dispositif selon l'une quelconque des revendications précédentes.

9. Circuit optoélectronique intégré comprenant au moins un dispositif selon l'une quelconque des revendications 1 a 7.

10. Circuit optoélectronique intégré monolithique comprenant au moins un dispositif selon l'une quelconque des revendications 1 a 7.

11. Procédé de réalisation d'un dispositif de transition de guides optiques comprenant un guide ruban enterré et un guide ruban gravé, caractérisé en ce qu'il comprend en outre les étapes suivantes :
a) réalisation d'au moins une couche épitaxiale sur un substrat ;
b) gravure d'une couche guidante pour définir un guide ruban enterré et une structure de transition dont la largeur varie selon sa longueur selon l'une quelconque des revendications 1 a 7 ;
c) réalisation d'au moins une couche épitaxiale dite supérieure, déposée par dessus ledit ruban enterré et ladite zone de transition ;
d) gravure d'une couche supérieure pour définir une structure de guide ruban gravé, ce guide ruban gravé étant disposé en superposition par rapport audit guide ruban enterré.

## Patentansprüche

1. Übergangsvorrichtung für optische Wellenleiter, die einen eingebetteten Streifenleiter 2 und einen geätzten Streifenleiter 3 aufweist, wobei der Übergang eine Wellenkopplung zwischen einem Ausbreitungsmodus des eingebetteten Streifenleiters 2 und einem Ausbreitungsmodus des geätzten Streifenleiters 3 gestattet, dadurch gekennzeichnet, daß der eingebettete Leiter eine Übergangszone (2ₜ) umfaßt, wobei diese Übergangszone (2ₜ) entlang ihrer Länge (lₜ) eine seitliche Verbreiterung des eingebetteten Streifenleiters 2 aufweist, und daß ein teilweises Übereinandergreifen durch vertikale Überlagerung der beiden Leiter in der Übergangszone vorgesehen ist, um eine Kopplung der beiden Ausbreitungsmodi gemäß einer bevorzugten Ausbreitungsrichtung (+/-z) in den beiden Leitern zu gestatten.

2. Übergang für optische Wellenleiter nach Anspruch 1, dadurch gekennzeichnet, daß der geätzte Streifenleiter auf seiner gesamten Länge eine konstante Breite aufweist und daß der eingebettete Streifenleiter eine Breite aufweist, die in der Übergangszone in adiabatischer Weise variiert.

3. Übergang für optische Wellenleiter nach Anspruch 2, dadurch gekennzeichnet, daß der eingebettete Streifenleiter eine Breite aufweist, die in der Übergangszone in linearer Weise variiert.

4. Übergang für optische Wellenleiter nach Anspruch 2, dadurch gekennzeichnet, daß der eingebettete Streifenleiter eine Breite aufweist, die in der Übergangszone in exponentieller Weise variiert.

5. Übergang für optische Wellenleiter nach einem der Ansprüche 1 bis 4, dadurch gekennzeichnet, daß die eingebetteten und geätzten Streifenleiter auf demselben Substrat ausgeführt sind.

6. Übergang für optische Wellenleiter nach einem der Ansprüche 1 bis 5, dadurch gekennzeichnet, daß die "leitende Schicht" oder "der Kern" für die beiden Leiter der gleiche ist.

7. Übergang für optische Wellenleiter nach einem der Ansprüche 1 bis 6, dadurch gekennzeichnet, daß die Übergangszone einen Abschluß durch Neigung aufweist, um unerwünschte Reflexionen zu vermeiden.

8. Optoelektronische Schaltung, die wenigstens eine Vorrichtung nach einem der vorhergehenden Ansprüche umfaßt.

9. Integrierte optoelektronische Schaltung, die wenigstens eine Vorrichtung nach einem der Ansprüche 1 bis 7 umfaßt.

10. Monolithische integrierte optoelektronische Schaltung, die wenigstens eine Vorrichtung nach einem der Ansprüche 1 bis 7 umfaßt.

11. Verfahren zur Herstellung einer Übergangsvorrichtung für optische Wellenleiter, die einen eingebetteten Streifenleiter und einen geätzten Streifenleiter umfaßt, dadurch gekennzeichnet, daß es außerdem die folgenden Schritte umfaßt:
a) Herstellung wenigstens einer epitaktischen Schicht auf einem Substrat;
b) Ätzen einer leitenden Schicht, um einen eingebetteten Streifenleiter und eine Übergangsstruktur, deren Breite entlang ihrer Länge variiert, nach einem der Ansprüche 1 bis 7 zu definieren;
c) Herstellung wenigstens einer epitaktischen Schicht, die obere Schicht genannt wird, die über dem eingebetteten Streifen und der Übergangszone abgeschieden wird;
d) Ätzen einer oberen Schicht, um einer Struktur eines geätzten Streifenleiters zu definieren, wobei dieser geätzte Streifenleiter in bezug auf den eingebetteten Streifenleiter in Überlagerung angeordnet ist.

## Claims

1. Optical waveguide transition device comprising a buried optical waveguide 2 and a ridged optical waveguide 3, said transition enabling wave coupling between a propagation mode of said buried optical waveguide 2 and a propagation mode of said ridged optical waveguide 3, characterized in that said buried waveguide comprises a transition area (2ₜ) in which transition area (2ₜ) said buried optical waveguide 2 widens laterally along its length (lₜ), and wherein provision is made for partial overlapping by vertical superposition of the two waveguides in said transition area to enable coupling of said two propagation modes in a preferred direction (+/-z) of propagation in said two waveguides.

2. Optical waveguide transition according to claim 1 characterized in that said ridged optical waveguide has a constant width over all of its length and said buried optical waveguide has a width which varies adiabatically in said transition area.

3. Optical waveguide transition according to claim 2 characterized in that said buried optical waveguide has a width which varies linearly in said transition area.

4. Optical waveguide transition according to claim 2 characterized in that said buried optical waveguide has a width which varies exponentially in said transition area.

5. Optical waveguide transition according to any one of claims 1 to 4 characterized in that said buried optical waveguide and said ridged optical waveguide are formed on the same substrate.

6. Optical waveguide transition according to any one of claims 1 to 5 characterized in that the "waveguide layer" or the "core" is the same for both waveguides.

7. Optical waveguide transition according to any one of claims 1 to 6 characterized in that said transition area has an inclined termination to prevent unwanted reflections.

8. Opto-electronic circuit comprising at least one device as claimed in any one of the preceding claims.

9. Integrated opto-electronic circuit comprising at least one device as claimed in any one of claims 1 to 7.

10. Monolithic integrated opto-electronic circuit comprising at least one device as claimed in any one of claims 1 to 7.

11. Method of fabricating an optical waveguide transition device comprising a buried optical waveguide and a ridged optical waveguide, characterized in that it additionally comprises the following steps:
a) growing at least one epitaxial layer on a substrate;
b) etching a waveguide layer to define a buried optical waveguide and a transition structure the width of which varies along its length as claimed in any one of claims 1 to 7;
c) growing at least one top epitaxial layer on top of said buried optical waveguide and said transition area;
d) etching a top layer to define a ridged optical waveguide structure superposed on said buried optical waveguide.
